(19) Europäisches Patentamt
European Patent Office
Office européen des brevets

(11) EP 0 463 075 B1

(12) EUROPEAN PATENT SPECIFICATION

(45) Date of publication and mention of the grant of the patent:
**28.05.1997 Bulletin 1997/22**

(21) Application number: **90905223.5**

(22) Date of filing: **19.03.1990**

(51) Int Cl.[6]: **C05C 9/00**, C05G 3/08

(86) International application number:
**PCT/GB90/00407**

(87) International publication number:
**WO 90/11262 (04.10.1990 Gazette 1990/23)**

# (54) STABILIZED UREA BASED FERTILIZERS FOR FOLIAR APPLICATION

STABILISIERTE BLATTDÜNGEMITTEL AUF DER BASIS VON HARNSTOFF

ENGRAIS A BASE D'UREE STABILISEE DESTINES A UNE APPLICATION FOLIAIRE

(84) Designated Contracting States:
**AT BE CH DE DK ES FR GB IT LI LU NL SE**

(30) Priority: **18.03.1989 GB 8906274**

(43) Date of publication of application:
**02.01.1992 Bulletin 1992/01**

(73) Proprietor: **STOLLER CHEMICAL LIMITED**
**Leyland, Lancs, PR5 3QN (GB)**

(72) Inventors:
- **HIGGONS, Dennis, John**
  **Southwell Nottinghamshire NG25 0ES (GB)**
- **POOL, Stephen, Newall**
  **Bury Lancashire (GB)**
- **STOLLER, Jerry, Herman**
  **Houston, TX 77000 (US)**

(74) Representative: **Manley, Nicholas Michael et al**
**W.P. Thompson & Co.**
**Coopers Building**
**Church Street**
**Liverpool L1 3AB (GB)**

(56) References cited:

| | |
|---|---|
| **EP-A- 0 055 493** | **CS-A- 235 736** |
| **FR-A- 2 362 101** | **GB-A- 1 359 884** |
| **US-A- 3 930 832** | **US-A- 4 500 335** |
| **US-A- 4 559 076** | |

- **CHEMICAL ABSTRACTS, vol. 107, no. 15, 12 October 1987 Columbus, Ohio, USA, page 651, abstract no. 133441u & CS-A-235736**
- **CHEMICAL ABSTRACTS, vol. 104, no. 25, 23 June 1986 Columbus, Ohio, USA, page 551, abstract no. 224151d G.J. GASCHO: "Improving the fertilizer efficiency of urea ammonium nitrate solutions by adding other nutrients." J. Fert. Issues 1986, 3(2), 62-5 see abstract**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 463 075 B1

## Description

The present invention relates to a liquid fertiliser composition and a method of stabilising urea based fertilisers for foliar application.

There are two distinct approaches which can be used to introduce nitrogen to plants.

Nitrogen can either be uptaken by the absorption of nitrogen as nitrate at the plants roots or it can be absorbed as urea on the leaf surfaces.

These differences give rise to either soil applications or foliar applications of nitrogen based fertilisers.

For soil application the nitrogen source can be added as urea, ammonium compounds, nitrites or nitrates since in the soil the nitrogen containing compounds are broken along the path.

$$\text{Urea} \rightarrow NH_3 \rightarrow NO_2 \rightarrow NO_3$$

The choice of fertiliser will depend on a variety of factors.

Since urea in the most concentrated form of artificial nitrogen fertiliser available (46%N) it is commonly used for both foliar and soil application.

In both cases the urea is broken down by urease to ammonia. For soil applications this is essential since the nitrogen source can only be uptaken as nitrate but for foliar applications the breakdown results in the leaf surfaces being scorched, which can result in the plant being killed. Consequently dose levels are limited to 10kg Urea-N per hectar in foliar applications for any one application.

In soil whilst it is necessary to have the urea converted to nitrate it is desirably to slow down the enzymic hydrolysis of urea to ammonia since when volatilisation occurs, some volatilised ammonia is lost and does not follow the path to nitrate.

Manufacturers of soil based fertilisers have attempted to tackle this problem and the problem of nitrate leaching by either:

1. Dusting prills of urea with sulphur to slow bacterial induced hydrolysis of urea, or
2. Adding direct nitrifying inhibitor such as dicyandiamide and 2-chloro-6-(trichloromethyl)pyridine to fertilisers to slow the reaction in the soil of

$$NH_3 \rightarrow NO_2 \rightarrow NO_3.$$

Furthermore, Fenn and Co. Workers in EP 55493 and US 4500335 have suggested adding solutions of calcium chloride, magnesium chloride or magnesium sulphate to soil to reduce the volatilisation of $NH_3$ from the soil.

These salts are claimed to alter the reactivity of the soil solution by an inter-reacting series of effects which include:-

a) Enhancing the ammonia absorbing power of the crop in the presence of enhanced levels of soluble calcium;
b) Acidifying the soil solution by interchanging $H^+$ and $Ca^{++}$ in the base exchange clay complex, releasing $H^+$ short term into the soil solution thus reducing $NH_3$ volatilisation effects; and
c) Integrating Ammonium Carbonate, formed by reaction of gaseous ammonia with Carbon Dioxide, and Calcium Chloride to produce Calcium Carbonate and Ammonium Chloride, again reducing volatilisation by fixing the ammonium ion as a salt;

All these effects are described as direct action on the $NH_4$ ion in the soil, derived either from natural organic sources or added nitrogen fertiliser. Such effects are also described in US-A-4559076.

When used for foliar application the urea is dissolved in water and sprayed. The amount of urea applied is however limited by the fact that the urea is broken down on the plant leaf to volatile ammonia which can scorch thereby damaging or killing the plant or is lost by volatilisation.

Urea solutions are known and GB 1561136 concerns itself with maximizing the amount of urea which can be dissolved in water. The patent discloses adding calcium chloride to urea and water to increase the proportion of urea which can be dissolved in a given amount of water. This specification discloses a liquid fertiliser which comprises a Urea-N:Ca molar ratio of up to 5.6:1 when the urea and calcium chloride are mixed with 58% by weight water, and no claim is made to such a solution.

Other fertiliser solutions include solutions of urea with added magnesium salts such as disclosed in GB 1359884.

US-A-3930832 discloses a foliar spray on the basis of $NH_4$ $NO_3/Zn$ $(NO_3)_2$ and urea. These solutions are applied to pecan trees to correct zinc deficiencies.

US-A-235736 discloses adding urea to calcium containing fertiliser for foliar application. Urea is added to the fertiliser since is has a favourable effect on the stability of calcium containing solutions at temperatures below the freezing point of water.

There is however a need for a nitrogen fertiliser which can be sprayed onto plants in a form whereby immediate breakdown to ammonia at the leaf surface is avoided. In this way volatilisation and plant scorch is avoided and the nitrogen uptake levels will be increased, since the urea will remain on the leaf surface in which form it can be readily uptaken.

The applicants have found that by dissolving urea in water with a sufficient amount of a divalent cationic monovalent anionic salt, the urea is made resistant to breakdown by urease.

The invention utilises a liquid fertiliser comprising urea, a divalent cationic monovalent anionic salt and water wherein the divalent cationic monovalent anionic salt is present in an amount sufficient to make the urea substantially resistant to breakdown by urease.

According to one aspect of the invention there is provided a method of providing a crop with urea in a form which has an increased stability to breakdown by urease characterised in that the urea is applied to the crop in a foliar application as a solution containing urea and a divalent cationic monovalent anionic salt selected from calcium chloride, calcium nitrate, magnesium chloride, magnesium nitrate and zinc chloride.

According to another aspect of the invention there is provided a method of providing a crop with urea in a form which has an increased stability to breakdown by urease characterised in that the urea is applied to the crop in a foliar application as a solution containing urea and a divalent cationic monovalent anionic salt, the molar ratio of urea-N to divalent cation in solution being from 8:1 to 3:1.

According to another aspect of the invention there is provided the use of a divalent cationic monovalent anionic salt for making a urea containing liquid fertiliser for foliar application more resistant to breakdown by urease.

Substantial urease resistance has been found to be achieved as the molar ratio of urea-N to the divalent cationic metal -Me of the divalent cationic monovalent anionic salt approaches 4:1.

It is preferred that the Urea-N to Me ratio is from 8:1 to 4:1, more preferably 6:1 to 4:1 and more preferably still 5.5:1 to 4:1, at which point urease resistance is maximised.

It will be apparent that increasing the N:Me ratio in favour of Me, i.e. going from 4:1 to 3:1 will not alter the fact that urease resistance has been maximised, and consequently ratios in which the N:Me ratio is increased in favour of Me beyond 4:1 will not alter the fact that urease resistance is achieved. Consequently such ratios should be included as being within the scope of the claims.

The divalent cationic monovalent anionic salts may be selected individually or in combination, to give the desired ratio, from Calcium Chloride, Calcium Nitrate, Magnesium Chloride, Magnesium Nitrate, Zinc Chloride and Zinc Nitrate.

The fertiliser may further comprise a potassium salt for example potassium chloride or potassium sulphate, or a sulphur product for example ammonium sulphate or ammonium thiosulphate.

Furthermore the liquid fertiliser should exclude trace elements selected from the group copper, iron, colbalt and nickel or phosphate.

The applicants have found that when urea is mixed with a divalent cationic monovalent anionic salt in effective proportions the hydrolysis of urea by urease, which is the main reaction on the plant leaf surface involving the formation of volatile ammonia is inhibited. Whilst not wishing to be bound by theory this phenomena is believed to be caused by the salt causing the urea to assume its Tautomer III configuration, defined in the classical organic literature. It is believed that a complex with the divalent cationic monovalent anionic salt is then formed.

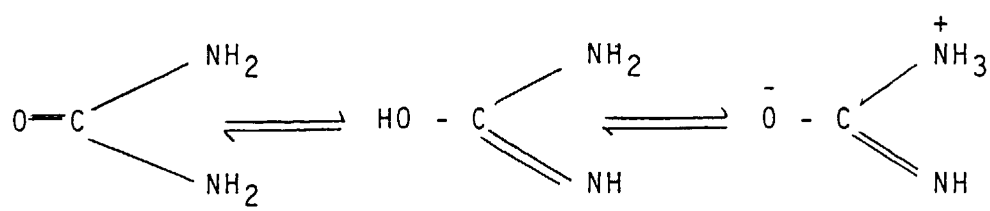

I II III

Structure II above is favoured by many as the likely structure of normal crystalline urea, as it explains the monoacidic properties of urea and the ready elimination of ammonia, both by chemical hydrolysis and particularly by enzymatic urease hydrolysis. Urease is endemic in most agricultural situations being particularly rich in decaying organic matter.

Thus it is believed that a divalent cation (X) associated with a monovalent anion (Y), gives a complex with urea of the formula:-

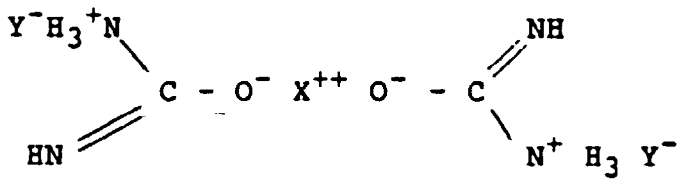

Solutions believed to contain complexes of this type have been shown to be stable to decomposition by urease, thus slowing down dramatically the evolution of ammonia, and giving a longer period for the urea per se to be able to penetrate either the leaves or the hypercotyl direct, rather than via the route Urea - $NH_3$ - $NO_2$ - $NO_3$ for root absorption, with the consequent losses of $NH_3$ by atmospheric evolution or nitrate leaching. This provides many advantages in normal agromomic practice.

Preferably the effective amount of the divalent cationic monovalent anionic salt will be an amount giving rise to a ratio of 4 urea nitrogens to 1 divalent cation.

In such a molar ratio, a complex is believed to be formed throughout the solution. However since ratios which approach 4:1 have been shown to be substantially urease resistant it is believed but when ratios of the urea-N to salt do not reach this theoretical ratio a complex may still be formed in part.

These findings are of great importance since it enables urea to be applied to crops in greater amounts by foliar application as opposed to soil applications. The reason for this is that in appropriate ratios the breakdown of urea to ammonium is inhibited. Solutions having effective ratios have been shown to slow the action of urease on the urea depending on the divalent cation/nitrogen ratios. This slowing down in the conversion of urea to ammonium means that the urea can be absorbed by the plants leaves. Without an effective ratio the urea is rapidly degraded to ammonia which can not be uptaken by the plant leaves and which furthermore can cause scorching of the plant and loss by volatilisation.

It is believed for example that when a urea/calcium chloride solution having an effective ratio is applied to a leaf, the calcium will be absorbed against a concentration gradient. The gradient is created by calcium accumulating in the leaves, some being built into cell wall structure, as pectate, and excess precipitated as oxalate.

Calcium uptake would be slow and the stable urea complex maintained. Urea would be absorbed by the leaf as urea rather than as ammonium-N from the stable structure and will be controlled probably by the rate of calcium absorbtion.

It is known that the absorbtion of nitrogen by the leaf is more efficient if absorbtion takes place as urea-N rather than ammonium-N. The presence of calcium chloride promotes this effect.

The socio-economic benefit of these findings is enormous. Nitrogen may be foliar applied and taken up efficiently and sufficiently to grow high quality yields without the problems of nitrate water pollution.

A variety of compositions have been tested and are used by way of example only, to illustrate the invention.

Two qualative tests and one quantative test have been used to test whether urea degradation by urease occurs when the urea was mixed to various cationic/anionic salts in various proportions.

These methods are described below and the results achieved are noted in the tables.

A test model was prepared whereby air, which has previously been scrubbed with boric acid was bubbled over a urea solution containing 3280mg of Urea in a closed container. A standard urease tablet was added, sufficient to decompose 400mg Urea in 3 hours at 35°C and the aspired air was then scrubbed with boric acid and the evolved $NH_3$ analysed by one of the following three methods.

1) The pH at the beginning and end of the reaction was checked. Normal Urea with urease was shown to give a rise of pH from 7-10 whereas stabilised urea remained at pH7, even in the presence of urease. A constant pH therefore indicates stabilising activity. Qualitative.

2) $NH_3$ gas evolution is easily detected by inserting a piece of pH paper into the container and measuring the pH change in the atmosphere - Qualitative.

3) The method can be quantified by direct analysis of $NH_3$ by the Kjeldahl method - Quantitive.

a) <u>Quantitive Test Method:</u>

10 Mls of test solution was warmed to 27° in a 50 ml beaker. One BDH urease tablet was added and crushed with a glass rod. The beaker was placed on a constant temperature tray and maintained at 27°C. It was covered with a bell jar and ammonia-free air was passed across the sample for 6 hours. The air was passed through 100mls of 2% boric acid solution containing indicators. The resulting solution was analysed for ppm ammonia nitrogen ($NH_3$ - N).

The molar ratios of Urea-N to Metal (Me) can be simply calculated from the weight ratios given.

For example a 14:0:0:10 solution N:P:K:Me where the divalent cationic monovalent anionic salt is calcium chloride has a N:Me/molar ratio of 4:1

$$\text{No moles} = \frac{\text{wt}}{\text{rmm}}$$

$$N = \frac{14}{14} : Ca = \frac{10}{40}$$

$$1 : 0.25$$

$$4 : 1$$

In practice a 14:0:0:10 will be made from

$$14 \times \frac{60}{28} \text{ urea,}$$

and

$$10 \times \frac{111}{40} \text{ calcium chloride,}$$

i.e.

30 g of Urea and
27.75g Calcium chloride,

The mix being made up to 100 g with water.

Table 1 shows the stabilising effect that different divalent cationic monovalent anionic salts have on urea.

**Table 1: Ammonia evolution with time, urea/divalent cation and monovalent anion salts compared with urea alone.**

| Ratio Urea-N:Me | Formula N-P-K-Me | Anion | $NH_3$ evolved 7 days ppm | Comments |
|---|---|---|---|---|
| | 14-0-0 | - | 1640 ml | aliquots of water added each day |
| 4:1 | 14-0-0-10 Ca | Cl | 4.6 | |
| 6:1 | 19-0-0-9 Ca | $NO_3$ | 4.4 | |
| 4:1 | 14-0-0-6 Mg | Cl | 6.2 | |
| 4:1 | 14-0-0-6 Mg | $NO_3$ | | |
| 4:1 | 9-0-0-10 Zn | Cl | 0 | |
| 6:1 | 13.4-0-0-10 Zn | $NO_3$ | | |

That monovalent cationic and divalent anionic salts do not show a stabilizing effect on urea can be seen from table 2.

**Table 2: Ammonia evolution with time, urea/equivalent cation, anion salts and various acids compared with urea alone and urea/$CaCl_2$ and urea/$MgCl_2$ at optimum concentrations.**

| Formula N-P-K-Me | Anion | $NH_3$ evolved 6 hours ppm | Comments |
|---|---|---|---|
| 14-0-0 | - | 351 | |
| 11-0-0-5 Mg | $SO_4$ | 152 | |
| 11.2-0-0-8 K | Cl | 505 | |
| 14-0-0+$H_2SO_4$ | $SO_4$ | 395 | |
| 14-0-0+$H_3PO_4$ | $PO_4$ | 385 | |
| 18-0-0+$H_3BO_3$ | $BO_3$ | 219 | |
| 37-0-0 | $NO_3$ | 721 | UAN Solution |
| 30-0-0 | $NO_3$ | 423 | UAN Solution |
| 14-0-0-10 Ca | Cl | 0 | |
| 14-0-0-6 Mg | Cl | 0 | |

Salts such as $MgSO_4$ and KC1 give virtually no stabilisation nor do the sulphates and phosphates of urea.

Metal salts of variable valency state (i.e. Fe, Ni, Mn, Co, Cu) were found to decompose in the presence of urea to complex oxides and hydroxides.

There are clearly defined ratios within which the stabilisation effect occurs which have been determined by quantitative studies with regard to the chlorides as given in Table 3 and confirmed with a series of qualitative studies for chlorides and nitrates as given in Tables 4 to 9 inclusive.

Tables 4 to 9 show that significant amount of Urea-N can be maintained on the leaf surface at ratios of Urea-N: Me which require only limited amounts of Me. For example at 10:1 N:Ca little or no smell was noted after 120 hours, indicating a large proportion of the nitrogen remains as urea-N. (table 4) For example at 15:1 N:Ca only a slight smell of ammonia was noted, indicating significant Urea-N remains even after 168 hours. (table 5). From these qualative tests it can be seen that even at ratios of 23:1 N:Zn urea resistance can prove significant.

It is clear from the tables that more significant inhibition commences at 14-0-0-5 Ca for $CaCl_2$, 19-0-0-7 Ca for Ca $(NO_3)_2$, 14-0-0-4 Mg for $MgCl_2$, and 19.6-0-0-4.8 Mg for $Mg(NO_3)_2$.

**Table 3: Ammonia evolution with time, urea/metal chlorides at given analysis. NB Zn++ in itself tends to be toxic to urease.**

| | Formula N-P-K-Me | Anion | $NH_3$ evolved 7 days ppm | Comments |
|---|---|---|---|---|
| | 14-0-0 | - | 1640 | 1 ml aliquots of water added to prevent crystallization |
| 20:1 | 14-0-0-2 Ca | Cl | 905 | Heavy ppt of $CaCO_3$ |
| 10:1 | 14-0-0-4 Ca | Cl | 272 | Heavy ppt of $CaCO_3$ |
| 8:1 | 14-0-0-5 Ca | Cl | 45.6 | Slight ppt of $CaCO_3$ |
| 6.66:1 | 14-0-0-6 Ca | Cl | 35.6 | Slight turbidity |
| 4:1 | 14-0-0-10 Ca | Cl | 4.6 | No ppt |
| 5.3:1 | 14-0-0-5 Ca/3 Mg | Cl | 0 | No ppt |
| 12:1 | 14-0-0-2 Mg | Cl | | |
| 8:1 | 14-0-0-3 Mg | Cl | | |
| 6:1 | 14-0-0-4 Mg | Cl | | |
| 4:1 | 14-0-0-6 Mg | Cl | 6.2 | No ppt |
| | 9-0-0 | - | | |
| | 9-0-0-1 Zn | Cl | | |
| | 9-0-0-5 Zn | Cl | | |
| | 9-0-0-10 Zn | Cl | 0 | no ppt |

Table 4 $NH_3$ evolution and pH change with time: Urea/$CaCl_2$ formulations.

| FORMULA | TIME HOURS | | | | | | | |
|---|---|---|---|---|---|---|---|---|
| | 0 | | | | 24 | | | |
| N-P-K-Ca | pHa | pH1 | $NH_3$ | Soly | pHa | pH1 | $NH_3$ | Soly |
| 14-0-0 | 7 | 7 | 0 | Clear | 11 | 10 | +++ | Clear |
| 14-0-0-2 Ca 20:1 | 7 | 7 | 0 | Clear | 10 | 9 | ++ | ppt |
| 14-0-0-4 Ca 10:1 | 7 | 7 | 0 | Clear | 9 | 8 | + | sl ppt |
| 14-0-0-6 Ca 6.6:1 | 7 | 7 | 0 | Clear | 7+ | 7+ | 0/+ | v.sl ppt |
| 14-0-0-8 Ca 5:1 | 7 | 7 | 0 | Clear | 7 | 7 | 0 | Clear |
| 14-0-0-10 Ca 4:1 | 7 | 7 | 0 | Clear | 7 | 7 | 0 | Clear |

pHa - pH of atmosphere above test solution
pHl - pH liquid
$NH_3$ - ammonia detected by smell

0 - no smell
\+ - slight smell
++ - moderate smell
+++ - strong smell

Soly - Clarity of solution

Table 4 $NH_3$ evolution and pH change with time: Urea/$CaCl_2$ formulations.

| FORMULA | TIME HOURS | | | | | | | |
|---|---|---|---|---|---|---|---|---|
| | 40 | | | | 120 | | | |
| N-P-K-Ca | pHa | pH1 | $NH_3$ | Soly | pHa | pH1 | $NH_3$ | Soly |
| 14-0-0 | 11 | 10 | +++ | Clear | 11 | 10 | +++ | Clear |
| 14-0-0-2 Ca 20:1 | 10 | 9 | ++ | ppt | 11 | 0+ | ++ | ppt |
| 14-0-0-4 Ca 10:1 | 9 | 8 | + | sl ppt | 8 | 7+ | 0/+ | sl ppt |
| 14-0-0-6 Ca 6.6:1 | 7 | 7+ | 0 | v.sl ppt | 7 | 7+ | 0 | v.sl ppt |
| 14-0-0-8 Ca 5:1 | 7 | 7 | 0 | Clear | 7 | 7 | 0 | Clear |
| 14-0-0-10 Ca 4:1 | 7 | 7 | 0 | Clear | 7 | 7 | 0 | Clear |

pHa - pH of atmosphere above test solution
pHl - pH liquid
$NH_3$ - ammonia detected by smell

Soly - Clarity of solution

0 - no smell
+ - slight smell
++ - moderate smell
+++ - strong smell

Table 5 $NH_3$ evolution and pH change with time: Urea/$Ca(NO_3)_2$ formulations.

| FORMULA | TIME HOURS | | | | | | | |
|---|---|---|---|---|---|---|---|---|
| | 0 | | | | 24 | | | |
| N-P-K-Ca | pHa | pH1 | $NH_3$ | Soly | pHa | pH1 | $NH_3$ | Soly |
| 19-0-0 | 7 | 7 | 0 | Clear | 11 | 9 | ++ | Clear |
| 19-0-0-1.8 Ca 30:1 | 7 | 7 | 0 | Clear | 9 | 8 | + | Turbid |
| 19-0-0-3.6 Ca 15:1 | 7 | 7 | 0 | Clear | 8 | 8 | + | Turbid |
| 19-0-0-5.4 Ca 10:1 | 7 | 7 | 0 | Clear | 7+ | 7+ | 0/+ | sl Turbid |
| 19-0-0-7.2 Ca 7.5:1 | 7 | 7 | 0 | Clear | 7 | 7 | 0 | Clear |
| 19-0-0-9 Ca 6:1 | 7 | 7 | 0 | Clear | 7 | 7- | 0 | Clear |

pHa - pH of atmosphere above test solution
pHl - pH liquid
$NH_3$ - ammonia detected by smell

0 - no smell
+ - slight smell
++ - moderate smell
+++ - strong smell

Soly - Clarity of solution

Table 5 $NH_3$ evolution and pH change with time: Urea/$Ca(NO_3)_2$ formulations.

| FORMULA | TIME HOURS | | | | | | | |
|---|---|---|---|---|---|---|---|---|
| | 40 | | | | 168 | | | |
| N-P-K-Ca | pHa | pH1 | $NH_3$ | Soly | pHa | pH1 | $NH_3$ | Soly |
| 19-0-0 | 11 | 9 | +++ | Clear | 11 | 9 | +++ | Clear |
| 19-0-0-1.8 Ca 30:1 | 9 | 8+ | ++ | ppt | 9 | 8+ | ++ | Heavy ppt |
| 19-0-0-3.6 Ca 15:1 | 8 | 9 | + | ppt | 9 | 8 | + | ppt |
| 19-0-0-5.4 Ca 10:1 | 9 | 7+ | + | sl ppt | 9 | 8 | + | ppt |
| 19-0-0-7.2 Ca 7.5:1 | 7+ | 7 | 0/+ | Clear | 7+ | 7 | 0/+ | sl Turbid |
| 19-0-0-9 Ca 6:1 | 7 | 7 | 0 | Clear | 7 | 7 | 0/+ | v.sl Turbid |

pHa - pH of atmosphere above test solution
pH1 - pH liquid
$NH_3$ - ammonia detected by smell

0 - no smell
+ - slight smell
++ - moderate smell
+++ - strong smell

Soly - clarity of solution

Table 6 $NH_3$ evolution and pH change with time: Urea/$MgCl_2$ formulations.

| FORMULA | TIME HOURS | | | | | | | |
|---|---|---|---|---|---|---|---|---|
| | 0 | | | | 6 | | | |
| N-P-K-Mg | pHa | pH1 | $NH_3$ | Soly | pHa | pH1 | $NH_3$ | Soly |
| 14-0-0 | 7 | 7 | 0 | Clear | 11 | 10 | ++ | Clear |
| 14-0-0-2 Mg 12:1 | 7 | 7 | 0 | Clear | 10 | 9 | ++ | Clear |
| 14-0-0-3 Mg 8:1 | 7 | 7 | 0 | Clear | 9 | 8+ | ++ | Clear |
| 14-0-0-4 Mg 6:1 | 7 | 7 | 0 | Clear | 9 | 9 | + | Clear |
| 14-0-0-5 Mg 4.8:1 | 7 | 7 | 0 | Clear | 7 | 7 | 0 | Clear |
| 14-0-0-6 Mg 4:1 | 7 | 7 | 0 | Clear | 7 | 7 | 0 | Clear |

pHa - pH of atmosphere above test solution
pH1 - pH liquid
$NH_3$ - ammonia detected by smell

0 - no smell
+ - slight smell
++ - moderate smell
+++ - strong smell

Soly - Clarity of solution

Table 6 $NH_3$ evolution and pH change with time: Urea/$MgCl_2$ formulations.

| FORMULA | TIME HOURS | | | | | | | |
|---|---|---|---|---|---|---|---|---|
| | 30 | | | | 120 | | | |
| N-P-K-Mg | pHa | pH1 | $NH_3$ | Soly | pHa | pH1 | $NH_3$ | Soly |
| 14-0-0 | 11 | 10 | +++ | Clear | 11 | 10 | ++ | Clear |
| 14-0-0-2 Mg 12:1 | 10 | 9 | ++ | Turbid | 10+ | 9 | +++ | ppt |
| 14-0-0-3 Mg 8:1 | 8+ | 9 | ++ | Turbid | 9 | 8 | +++ | ppt |
| 14-0-0-4 Mg 6:1 | 8 | 8 | + | Clear | 8 | 8 | + | Turbid |
| 14-0-0-5 Mg 4.8:1 | 7 | 7 | 0 | Clear | 7 | 7 | 0 | Clear |
| 14-0-0-6 Mg 4:1 | 7 | 7 | 0 | Clear | 7 | 7 | 0 | Clear |

pHa - pH of atmosphere above test solution
pHl - pH liquid
$NH_3$ - ammonia detected by smell

0 - no smell
\+ - slight smell
++ - moderate smell
+++ - strong smell

Soly - Clarity of solution

Table 7 $NH_3$ evolution and pH change with time: Urea/$Mg(NO_3)_2$ formulations.

| FORMULA | TIME HOURS | | | | | | | |
|---|---|---|---|---|---|---|---|---|
| | 0 | | | | 6 | | | |
| N-P-K-Mg | pHa | pH1 | $NH_3$ | Soly | pHa | pH1 | $NH_3$ | Soly |
| 15.4-0-0-1.2 18:1 | 7 | 7 | 0 | Clear | 10 | 9+ | ++ | Clear sl yellow |
| 16.8-0-0-2.4 12:1 | 7 | 7 | 0 | Clear | 9+ | 9 | 0/+ | Clear sl yellow |
| 17.5-0-0-3 10:1 | 7 | 7- | 0 | Clear | 9 | 9 | 0 | Clear yellow |
| 18.2-0-0-3.6 8.6:1 | 7 | 6+ | 0 | Clear | 8+ | 8 | 0 | Clear yellow -peach |
| 19.6-0-0-4.8 7:1 | 7 | 6 | 0 | Clear | 8+ | 8 | 0 | Clear sl peach |
| 21-0-0-6 6:1 | 7 | 6 | 0 | Clear | 7 | 7 | 0 | Clear peach |

pHa - pH of atmosphere above test solution
pH1 - pH liquid
$NH_3$ - ammonia detected by smell

Soly - Clarity of solution

0 - no smell
\+ - slight smell
++ - moderate smell
+++ - strong smell

Table 7 $NH_3$ evolution and pH change with time: Urea/$Mg(NO_3)_2$ formulations.

| FORMULA | TIME HOURS | | | | | | | |
|---|---|---|---|---|---|---|---|---|
| | 24 | | | | 48 | | | |
| N-P-K-Mg | pHa | pH1 | $NH_3$ | Soly | pHa | pH1 | $NH_3$ | Soly |
| 15.4-0-0-1.2 18:1 | 10 | 9+ | ++ | Clear | 11 | 10 | ++ | Clear |
| 16.8-0-0-2.4 12:1 | 9+ | 9+ | 0/+ | Clear | 10 | 9+ | 0/+ | Clear |
| 17.5-0-0-3 10:1 | 9+ | 9 | 0/+ | Clear | 9+ | 9 | + | Clear |
| 18.2-0-0-3.6 8.6:1 | 9 | 8+ | 0 | Clear | 9 | 8+ | 0/+ | Clear |
| 19.6-0-0-4.8 7:1 | 8- | 8 | 0 | Clear | 8- | 8 | 0 | Clear |
| 21-0-0-6 6:1 | 7 | 7+ | 0 | Clear | 7 | 7+ | 0 | Clear |

pHa - pH of atmosphere above test solution
pHl - pH liquid
$NH_3$ - ammonia detected by smell

0 - no smell
\+ - slight smell
++ - moderate smell
+++ - strong smell

Soly - Clarity of solution

Table 8: $NH_3$ evolution and pH change with time: Urea/$ZnCl_2$ formulations.

| FORMULA | TIME HOURS | | | | | | | | | | | |
|---|---|---|---|---|---|---|---|---|---|---|---|---|
| | 0 | | | | 26 | | | | 96 | | | |
| N-P-K-Zn | pHa | pH1 | $NH_3$ | Soly | pHa | pH1 | $NH_3$ | Soly | pHa | pH1 | $NH_3$ | Soly |
| 0.5-0-0 | 7 | 7 | 0 | Clear | 10 | | + | Clear | 10 | 10 | ++ | Clear |
| 8.5-0-0-2 Zn 19.7:1 | 7 | 7 | 0 | Clear | 7 | 7 | + | Turbid | 7 | 7+ | + | Turbid |
| 8.5-0-0-4 Zn 9.8:1 | 7 | 6 | 0 | Clear | 7 | 6+ | 0 | Clear | 7 | 7 | 0 | Clear |
| 8.5-0-0-6 Zn 6.5:1 | 7 | 6- | 0 | Clear | 7 | 6+ | 0 | Clear | 7 | 7 | 0 | Clear |
| 8.5-0-0-8 Zn 4.9:1 | 7 | 5+ | 0 | Clear | 7 | 6+ | 0 | Clear | 7 | 5+ | 0 | Clear |
| 8.5-0-0-10 Zn 3.9:1 | 7 | 5 | 0 | Clear | 7 | 5 | 0 | Clear | 7 | 5 | 0 | Clear |

pHa - pH of atmosphere above test solution
pH1 - pH liquid
$NH_3$ - ammonia detected by smell

0 - no smell
\+ - slight smell
++ - moderate smell
+++ - strong smell

Soly - clarity of solution

Table 9 $NH_3$ evolution and pH change with time: Urea/$Zn(NO_3)_2$ formulations.

| FORMULA | TIME HOURS 0 | | | | TIME HOURS 6 | | | |
|---|---|---|---|---|---|---|---|---|
| N-P-K-Zn | pHa | pH1 | $NH_3$ | Soly | pHa | pH1 | $NH_3$ | Soly |
| 9-0-0-0 | 7 | 7 | 0 | Clear | 11 | 10 | ++ | Clear |
| 9.9-0-0-2 23:1 | 7 | 7- | 0 | Clear | 7 | 7 | 0 | Clear |
| 10.8-0-0-4 12.5:1 | 7 | 6+ | 0 | Clear | 7 | 7 | 0 | Clear |
| 11.2-0-0-5 10.4:1 | 7 | 6 | 0 | Clear | 7 | 6 | 0 | Clear |
| 11.6-0-0-6 8.9:1 | 7 | 6- | 0 | Clear | 7 | 6- | 0 | Clear |
| 12.5-0-0-8 7.25:1 | 7 | 5+ | 0 | Clear | 7 | 6 | 0 | Clear |
| 13.4-0-0-10 6.2:1 | 7 | 5+ | 0 | Clear | 7 | 6 | 0 | Clear |

pHa - pH of atmosphere above test solution
pHl - pH liquid
$NH_3$ - ammonia detected by smell

0 - no smell
\+ - slight smell
++ - moderate smell
+++ - strong smell

Soly - Clarity of solution

Table 9 $NH_3$ evolution and pH change with time: Urea/$Zn(NO_3)_2$ formulations.

| FORMULA | TIME HOURS | | | | | | | |
|---|---|---|---|---|---|---|---|---|
| | 24 | | | | 48 | | | |
| N-P-K-Zn | pHa | pH1 | $NH_3$ | Soly | pHa | pH1 | $NH_3$ | Soly |
| 9-0-0-0 | 11 | 10 | +++ | Clear | 11 | 11 | +++ | Clear |
| 9.9-0-0-2 23:1 | 7 | 7 | 0 | Clear | 7 | 7 | 0 | Clear |
| 10.8-0-0-4 12.5:1 | 7 | 7 | 0 | Clear | 7 | 7 | 0 | Clear |
| 11.2-0-0-5 10.4:1 | 7 | 7- | 0 | Clear | 7 | 7- | 0 | Clear |
| 11.6-0-0-6 8.9:1 | 7 | 6 | 0 | Clear | 7 | 6+ | 0 | Clear |
| 12.5-0-0-8 7.25:1 | 7 | 6 | 0 | Clear | 7 | 6 | 0 | Clear |
| 13.4-0-0-10 6.2:1 | 7 | 6- | 0 | Clear | 7 | 6- | 0 | Clear |

pHa - pH of atmosphere above test solution
pHl - pH liquid
$NH_3$ - ammonia detected by smell

0 - no smell
\+ - slight smell
++ - moderate smell
+++ - strong smell

Soly - Clarity of solution

In the case of Zn, inhibition of hydrolysis also occurs but as Zn can easily poison the enzyme and nutritional Zn requirements of plants are of a low order, Zn is only ever considered as an additive to either Ca, Mg or mixed Ca/Mg products for practical use in agriculture. However with 8.5 to 9%N in a solution a minimum of 4% Zn is necessary to effect stability in its own right (9-0-0- 4% Zn).

It has been further found that the stabilising effect on urea can be achieved by mixing the divalent cationic monovalent anionic salt so that the molar ratio approaches 4:1.

Field Test Work

Seven field trials have been carried out on four crops - Winter Wheat, Spring Wheat, Spring Barley, and Potatoes. The broad conclusions of this work can be summarised as follows:

(a) Phytotoxicity on Cereals

The phytotoxicity of urea to cereal crops caused by rapid evolution of ammonia under high temperature conditions is dramatically reduced by the presence of $CaC1_2$ at optimum ratios with an almost identical effect from $Ca(NO_3)_2$ and $MgC1_2$. See Table 10 below.

**Table 10: Phytotoxicity under situations of rapid spray drying.**

| Crop | Treatment | N rate kg/ha | Scorch Score |
|---|---|---|---|
| Spring Barley | Control | - | 0 |
| | Urea | 15 | 8 |
| | Urea/$CaCl_2$ | 15 | 0 |
| | Urea/$Ca(NO_3)_2$ | 22.6 | 0 |

Scorch Score: 0 = none, 9 = severe
For summary of overall results see Table 14 Part I.

(b) Phytotoxicity on Potatoes

In one trial on potatoes phytotoxicity was not prevented by $CaC1_2$ with urea. It is thought that the presence of C1 compromised the results. C1 is known to be highly toxic to potatoes and $Ca(NO_3)_2$ is being checked as an alternative.

(c) Nutritional Responses

From the nutritional stand point the following trends can be noted:

i. Urea/$CaC1_2$ or Urea/$MgC1_2$ are, in general, equal or superior in nutrient uptake response when compared to urea alone. This variability would be expected as it is only when significant loss of $NH_3$ occurs from a urea alone spray that the inhibition effects of $CaC1_2$ or $MgC1_2$ can express themselves as a superior nutritional N response.

ii. Slight to marked effects show on the improvement of the uptake of secondary nutrients such as calcium and magnesium when either Urea/$CaC1_2$ or Urea/$MgC1_2$ is applied. See Table 11 below.

**Table 11: Nutrient Uptake/Offtake from foliar sprays. Timing of sprays on cereals - late season.**

| Crop | Treatment | N rate kg/ha | Tissue Analysis % | | |
|---|---|---|---|---|---|
| | | | N | Ca | Mg |
| Winter Wheat | Urea<br>Urea/$CaCl_2$<br>Urea/Mg/$Cl_2$ | 20<br>20<br>20 | 2.97<br>4.15<br>4.17 | 0.68<br>0.69<br>0.73 | 0.20<br>0.20<br>0.24 |
| Winter Wheat | Urea<br>Urea/$CaCl_2$<br>Urea/$MgCl_2$ | 20<br>20<br>20 | 3.5<br>3.6<br>3.6 | 0.59<br>0.73<br>0.70 | 0.13<br>0.14<br>0.15 |
| Spring Barley | Urea<br>Urea/$CaCl_2$<br>Urea/$MgCl_2$ | 70<br>70<br>70 | 1.69<br>1.75<br>1.76 | 0.19<br>0.23<br>0.22 | 0.13<br>0.13<br>0.15 |
| Potatoes | Urea<br>Urea/$CaCl_2$<br>Urea/$MgCl_2$ | 20<br>20<br>20 | 3.5<br>3.6<br>3.6 | 3.19<br>3.61<br>2.97 | 0.30<br>0.30<br>0.47 |
| | | | Nutrient off-take kg/ha | | |
| | | | N | Ca | Mg |
| Potatoes | Urea<br>Urea/$CaCl_2$<br>Urea/$MgCl_2$ | 70<br>70<br>70 | 83<br>92<br>94 | 9.3<br>11.8<br>11.5 | 6.5<br>6.9<br>8.0 |

For summary of all results see Table 14 Part 2.

iii. Urea/$CaC1_2$ and Urea/$MgC1_2$ as foliar sprays at lower N rates approaches the nutritional value (measured as yield, specific weight, 1000 grain weight) of traditional soil applied granular fertilisers at standard rates, in some cases, but never exceeds them. There is a trend for Urea/$MgC1_2$ to be slightly better than Urea/$CaC1_2$ but this may be related directly to the Mg status of individual soils. See Table 12 above.

iv. There are strong indications that in the series of trials carried out that Urea/$CaC1_2$ and Urea/$MgC1_2$ have a greater effect on quality than on yield. This would be expected, however, from the spray timings involved. See Table 13.

**Table 12: Nutritional value of Urea/$CaCl_2$ and Urea/$MgCl_2$ spray treatments compared with traditional granular fertilisers soil applied.**

| Crop | Treatment | N rate kg/ha | Yield t/ha | Specific wt kg/hl | 1000 grain wt g |
|---|---|---|---|---|---|
| Winter Wheat | Urea/$CaCl_2$ | 20 | 10.94 | 77.0 | - |
| | Urea/$MgCl_2$ | 20 | 11.08 | 78.0 | - |
| | $NH_4NO_3$ dry | 31 | 10.95 | 77.5 | - |
| Spring Wheat | Urea/$CaCl_2$ | 20 | - | - | 43.3 |
| | Urea/$MgCl_2$ | 20 | - | - | 43.0 |
| | CAN 27 dry | 40 | - | - | 44.2 |
| Potatoes | Urea/$CaCl_2$ | 20 | 39.7 | - | - |
| | Urea/$MgCl_2$ | 20 | 37.7 | - | - |
| | $NH_4NO_3$ dry | 30 | 39.5 | - | - |

For summary of overall results see Table 14 Part 3.

**Table 13: Quality Assessment - Cereals.**

| Crop | Treatment | N rate kg/ha | Protein % | Hagberg No | Hectolitre wt kg |
|---|---|---|---|---|---|
| Winter Wheat | Control | 31 dry | 8.24 | 262 | 77.5 |
| | Urea | 20 | 8.59 | 275 | 77.0 |
| | Urea/$CaCl_2$ | 20 | 8.49 | 263 | 77.0 |
| | Urea/$MgCl_2$ | 20 | 8.71 | 291 | 78.0 |

For summary of overall results see Table 14 Part 4.

Trials were carried out on cereals mainly as late season foliar sprays at a time when nutritional responses from nitrogen would be expected to be in crop quality rather than yield. This is the current traditional market for foliar applied urea.

(d) Summary of all Trials

Table 14 summarises the field trials. Results which were positive for Urea/$CaC1_2$ or Urea/$MgC1_2$ are indicated +, results which where positive for Urea alone are indicated -, results where no difference was observed or measured are indicated =, and where the characteristic was not tested is indicated x, except for Part 3 see below.

**Table 14 Part 1: Comparison of phytotoxicity between trials.**

| Trial Ref: Table 10 | Phytotoxicity |
|---|---|
| NOSCA Spring Barley | - |
| NOSCA Potatoes | = |
| ASEPTA Spring Wheat | = |
| ASEPTA Potatoes | = |
| SCOT AG Winter Wheat | = |
| LANDMARK Winter Wheat | = |
| LINDEAN FM Spring Barley | + |

**Table 14 Part 2: Comparison of Nutrient Uptake between trials.**

| Trial Ref: Table 11 | Nutrient Uptake | | |
| --- | --- | --- | --- |
| | N | Ca | Mg |
| NOSCA Spring Barley | + + | + | + |
| NOSCA Potatoes | - | + | + |
| ASEPTA Spring Wheat | +/-* | + | + |
| ASEPTA Potatoes | + | + | + |
| SCOT AG Winter Wheat | + | + | + |
| LANDMARK Winter Wheat | + | + | + |
| LINDEAN FM Spring Barley | x | x | x |

* Urea/$CaCl_2$ was not as good as urea alone in this trial.

**Table 14 Part 3: Yield comparison between soil applied traditional granular fertilizers applied at standard rates and Urea/$CaCl_2$ and Urea/$MgCl_2$ products foliar applied at lower N rates as shown.**

| Trials Ref: Table 12 | Yield Comparison | Comparitive N rates kg/ha: Urea/$CaCl_2$ - Urea/$MgCl_2$ | Comparitive N rates kg/ha: Granular Fertilizer |
|---|---|---|---|
| NOSCA Spring Barley | - | 70 | 75 |
| NOSCA Potatoes | = | 20 | 30 |
| ASEPTA Spring Wheat | x | 20 | 40 |
| ASEPTA Potatoes | - | 20 | 50 |
| SCOT AG Winter Wheat | + | 20 | 30 |
| LANDMARK Winter Wheat | x | 20 | 40 |
| LINDEAN FM Spring Barley | x | 15 | Not Known |

**Table 14 Part 4: Comparison of quality benefits between trials.**

| Trial Ref: Table 13 | Quality | Characteristics |
|---|---|---|
| NOSCA Spring Barley | = | 1000 Grain wt, Specific weight |
| NOSCA Potatoes | x | |
| ASEPTA Spring Wheat | + | 1000 Grain wt |
| ASEPTA Potatoes | x | |
| SCOT AG Winter Wheat | + | % Protein, Hagberg no. |
| LANDMARK Winter Wheat | x | |
| LINDEAN FM Spring Barley | x | |

The conclusion to be drawn from these trials are that foliar treatments with Urea or their stabilised forms of Urea/$CaC1_2$ and Urea/$MgC1_2$ can act as an alternative to soil applications when it comes to maintain crop quality and yields. Furthermore they have the benefits of far less risk of leaching because of the property of direct absorbtion into the leaf.

## Claims

1. A method of providing a crop with urea in a form which has an increased stability to breakdown by urease characterised in that the urea is applied to the crop in a foliar application as a solution containing urea and a divalent cationic monovalent anionic salt selected from magnesium chloride, magnesium nitrate and zinc chloride.

2. A method as claimed in claim 1 wherein the divalent cationic monovalent anionic salt is present in an amount which gives a molar ratio of Urea-N to divalent cation of less than or equal to 8:1.

3. A method as claimed in claim 2 wherein the molar ratio of urea-N to divalent cation is less than or equal to 6:1.

4. A method as claimed in claim 3 wherein the molar ratio of urea-N to divalent cation is 4:1.

5. A method as claimed in any of the preceding claims in which the composition further comprises a potassium salt.

6. A method as claimed in claim 5 in which the potassium salt is potassium sulphate or potassium chloride.

7. A method as claimed in any of the preceding claims in which the composition further comprises a sulphur product.

8. A method as claimed in claim 7 in which the sulphur product is ammonium thiosulphate or ammonium sulphate.

9. A method of providing a crop with urea in a form which has an increased stability to breakdown by urease characterised in that the urea is applied to the crop in a foliar application as a solution containing urea and a divalent cationic monovalent anionic salt, the molar ratio of urea-N to divalent cation in solution being from 5.5 to 4:1.

10. A method as claimed in claim 9, wherein the divalent cationic monovalent anionic salt is selected from calcium chloride, calcium nitrate, magnesium chloride, magnesium nitrate, zinc chloride and zinc nitrate.

11. A method as claimed in claim 9 or 10 in which the composition further comprises a potassium salt.

12. A method as claimed in claim 11, in which the potassium salt is potassium sulphate or potassium chloride.

13. A method as claimed in any of claims 9 to 12, in which the composition further comprises a sulphur product.

14. A method as claimed in claim 13, in which the sulphur product is ammonium thiosulphate or ammonium sulphate.

15. The use of a divalent cationic monovalent anionic salt for making a urea containing liquid fertiliser for foliar application more resistant to breakdown by urease.

16. The use of a divalent cationic monovalent anionic salt for making a urea containing liquid fertiliser as claimed in claim 15, in which the divalent cationic monovalent anionic salt is one or more selected from calcium chloride, calcium nitrate, magnesium chloride, magnesium nitrate, zinc chloride and zinc nitrate.

17. The use of a divalent cationic monovalent anionic salt for making a urea containing liquid fertiliser as claimed in claim 15 or 16, in which the divalent cationic salt is in an amount which gives a molar ratio of Urea-N to divalent cation of less than or equal to 8:1.

18. The use of a divalent cationic monovalent anionic salt for making a urea containing liquid fertiliser as claimed in claim 17, wherein the molar ratio of Urea-N to divalent cation is less than or equal to 6:1.

19. The use of a divalent cationic monovalent anionic salt for making a urea containing liquid fertiliser as claimed in claim 18, wherein the molar ratio of Urea-N to divalent cation is 4:1.

20. The use of a divalent cationic monovalent anionic salt for making a urea containing liquid fertiliser as claimed in any of claims 17 to 19, which further comprises a potassium salt.

21. The use of a divalent cationic monovalent anionic salt for making a urea containing liquid fertiliser as claimed in claim 20, in which the potassium salt is potassium sulphate or potassium chloride.

22. The use of a divalent cationic monovalent anionic salt for making a urea containing liquid fertiliser as claimed in any of claims 17 to 21, which further comprises a sulphur product.

23. The use of a divalent cationic monovalent anionic salt for making a urea containing liquid fertiliser as claimed in claim 22, in which the sulphur product is ammonium thiosulphate or ammonium sulphate.

**Patentansprüche**

1. Verfahren zur Versorgung einer Pflanzenkultur mit Harnstoff in einer Form, die eine erhöhte Stabilität gegenüber

Aufspaltung durch Urease aufweist, dadurch gekennzeichnet, daß der Harnstoff auf die Pflanzenkultur in einer Blattapplikation als eine Lösung aufgebracht wird, die Harnstoff und ein zweiwertiges kationisches, einwertiges anionisches Salz enthält, das aus Magnesiumchlorid, Magnesiumnitrat und Zinkchlorid ausgewählt wird.

**2.** Verfahren nach Anspruch 1, worin das zweiwertige kationische, einwertige anionische Salz in einer Menge vorliegt, die ein Molverhältnis von Harnstoff-N zu zweiwertigem Kation von weniger als oder gleich 8:1 ergibt.

**3.** Verfahren nach Anspruch 2, worin das Molverhältnis von Harnstoff-N zu zweiwertigem Kation weniger als oder gleich 6:1 ist.

**4.** Verfahren nach Anspruch 3, worin das Molverhältnis von Harnstoff-N zu zweiwertigem Kation 4:1 ist.

**5.** Verfahren nach einem der vorangehenden Ansprüche, worin die Zusammensetzung darüber hinaus ein Kaliumsalz umfaßt.

**6.** Verfahren nach Anspruch 5, worin das Kaliumsalz Kaliumsulfat oder Kaliumchlorid ist.

**7.** Verfahren nach einem der vorangehenden Ansprüche, worin die Zusammensetzung darüber hinaus ein Schwefelprodukt umfaßt.

**8.** Verfahren nach Anspruch 7, worin das Schwefelprodukt Ammoniumthiosulfat oder Ammoniumsulfat ist.

**9.** Verfahren zur Versorgung einer Pflanzenkultur mit Harnstoff in einer Form, die eine erhöhte Stabilität gegenüber Aufspaltung durch Urease aufweist, dadurch gekennzeichnet, daß der Harnstoff auf die Pflanzenkultur in einer Blattapplikation als eine Lösung aufgebracht wird, die Harnstoff und ein zweiwertiges kationisches, einwertiges anionisches Salz enthält, wobei das Molverhältnis des Harnstoff-N zu zweiwertigem Kation in Lösung von 5,5 bis 4:1 ist.

**10.** Verfahren nach Anspruch 9, worin das zweiwertige kationische, einwertige anionische Salz aus Calciumchlorid, Calciumnitrat, Magnesiumchlorid, Magnesiumnitrat, Zinkchlorid und Zinknitrat ausgewählt wird.

**11.** Verfahren nach Anspruch 9 oder 10, worin die Zusammensetzung darüber hinaus ein Kaliumsalz umfaßt.

**12.** Verfahren nach Anspruch 11, worin das Kaliumsalz Kaliumsulfat oder Kaliumchlorid ist.

**13.** Verfahren nach einem der Ansprüche 9 bis 12, worin die Zusammensetzung darüber hinaus ein Schwefelprodukt umfaßt.

**14.** Verfahren nach Anspruch 13, worin das Schwefelprodukt Ammoniumthiosulfat oder Ammoniumsulfat ist.

**15.** Verwendung eines zweiwertigen kationischen, einwertigen anionischen Salzes zum Herstellen eines Harnstoff-enthaltenden flüssigen Düngemittels zur Blattapplikation, das gegen eine Aufspaltung durch Urease resistenter ist.

**16.** Verwendung eines zweiwertigen kationischen, einwertigen anionischen Salzes zum Herstellen eines Harnstoff-enthaltenden flüssigen Düngemittels nach Anspruch 15, worin das zweiwertige kationische, einwertige anionische Salz eines oder mehr als eines ist, das aus Calciumchlorid, Calciumnitrat, Magnesiumchlorid, Magnesiumnitrat, Zinkchlorid und Zinknitrat ausgewählt wird.

**17.** Verwendung eines zweiwertigen kationischen, einwertigen anionischen Salzes zum Herstellen eines Harnstoff-enthaltenden flüssigen Düngemittels nach Anspruch 15 oder 16, worin das zweiwertige kationische Salz in einer Menge vorliegt, die ein Molverhältnis von Harnstoff-N zu zweiwertigem Kation von weniger als oder gleich 8:1 ergibt.

**18.** Verwendung eines zweiwertigen kationischen, einwertigen anionischen Salzes zum Herstellen eines Harnstoff-enthaltenden flüssigen Düngemittels nach Anspruch 17, worin das Molverhältnis von Harnstoff-N zu zweiwertigem Kation weniger als oder gleich 6:1 ist.

**19.** Verwendung eines zweiwertigen kationischen, einwertigen anionischen Salzes zum Herstellen eines Harnstoff-enthaltenden flüssigen Düngemittels nach Anspruch 18, worin das Molverhältnis von Harnstoff-N zu zweiwertigem Kation 4:1 ist.

**20.** Verwendung eines zweiwertigen kationischen, einwertigen anionischen Salzes zum Herstellen eines Harnstoff-enthaltenden flüssigen Düngemittels nach einem der Ansprüche 17 bis 19, das darüber hinaus ein Kaliumsalz umfaßt.

**21.** Verwendung eines zweiwertigen kationischen, einwertigen anionischen Salzes zum Herstellen eines Harnstoff-enthaltenden flüssigen Düngemittels nach Anspruch 20, worin das Kaliumsalz Kaliumsulfat oder Kaliumchlorid ist.

**22.** Verwendung eines zweiwertigen kationischen, einwertigen anionischen Salzes zum Herstellen eines Harnstoff-enthaltenden flüssigen Düngemittels nach einem der Ansprüche 17 bis 21, das darüber hinaus ein Schwefelprodukt umfaßt.

**23.** Verwendung eines zweiwertigen kationischen, einwertigen anionischen Salzes zum Herstellen eines Harnstoff-enthaltenden flüssigen Düngemittels nach Anspruch 22, worin das Schwefelprodukt Ammoniumthiosulfat oder Ammoniumsulfat ist.

**Revendications**

**1.** Une méthode pour fournir à une culture de l'urée sous une forme qui possède une stabilité accrue à la décomposition par uréase, caractérisée en ce que l'urée est appliquée à la culture en une application foliaire sous forme de solution contenant de l'urée et un sel cationique bivalent anionique monovalent sélectionné à partir du chlorure de magnésium, du nitrate de magnésium et du chlorure de zinc.

**2.** Une méthode telle que revendiquée dans la revendication 1, dans laquelle le sel cationique bivalent anionique monovalent est présent selon une quantité qui donne un rapport molaire d'urée-N au cation bivalent inférieur ou égal à 8:1.

**3.** Une méthode telle que revendiquée dans la revendication 2, dans laquelle le rapport molaire d'urée-N au cation bivalent est inférieur ou égal à 6:1.

**4.** Une méthode telle que revendiquée dans la revendication 3, dans laquelle le rapport molaire d'urée-N au cation bivalent est de 4:1.

**5.** Une méthode telle que revendiquée dans l'une quelconque des revendications précédentes, dans laquelle la composition comprend en outre un sel de potassium.

**6.** Une méthode telle que revendiquée dans la revendication 5, dans laquelle le sel de potassium est du sulfate de potassium ou du chlorure de potassium.

**7.** Une méthode telle que revendiquée dans l'une quelconque des revendications précédentes, dans laquelle la composition comprend en outre un produit du soufre.

**8.** Une méthode telle que revendiquée dans la revendication 7, dans laquelle le produit du soufre est du thiosulfate d'ammonium ou du sulfate d'ammonium.

**9.** Une méthode pour fournir à une culture de l'urée sous une forme qui possède une stabilité accrue à la décomposition par uréase, caractérisée en ce que l'urée est appliquée à la culture en une application foliaire sous forme de solution contenant de l'urée et un sel cationique bivalent anionique monovalent, le rapport molaire d'urée-N au cation bivalent en solution étant de 5,5 à 4:1.

**10.** Une méthode telle que revendiquée dans la revendication 9, dans laquelle le sel cationique bivalent anionique monovalent est sélectionné à partir de chlorure de calcium, de nitrate de calcium, de chlorure de magnésium, de nitrate de magnésium, de chlorure de zinc et de nitrate de zinc.

**11.** Une méthode telle que revendiquée dans la revendication 9 ou 10, dans laquelle la composition comprend en

outre un sel de potassium.

12. Une méthode telle que revendiquée dans la revendication 11, dans laquelle le sel de potassium est du sulfate de potassium ou du chlorure de potassium.

13. Une méthode telle que revendiquée dans l'une quelconque des revendications 9 à 12, dans laquelle la composition comprend en outre un produit du soufre.

14. Une méthode telle que revendiquée dans la revendication 13, dans laquelle le produit du soufre est du thiosulfate d'ammonium ou du sulfate d'ammonium.

15. L'utilisation d'un sel cationique bivalent anionique monovalent pour rendre un engrais liquide contenant de l'urée pour application foliaire, plus résistant à la décomposition par uréase.

16. L'utilisation d'un sel cationique bivalent anionique monovalent pour fabriquer un engrais liquide contenant de l'urée tel que revendiqué dans la revendication 15, dans lequel le sel cationique bivalent anionique monovalent est une ou plusieurs substances sélectionnées à partir de chlorure de calcium, de nitrate de calcium, de chlorure de magnésium, de nitrate de magnésium, de chlorure de zinc et de nitrate de zinc.

17. L'utilisation d'un sel cationique bivalent anionique monovalent pour fabriquer un engrais liquide contenant de l'urée tel que revendiqué dans la revendication 15 ou 16, dans lequel le sel cationique bivalent est présent selon une quantité qui donne un rapport molaire d'urée-N au cation bivalent inférieur ou égal à 8:1.

18. L'utilisation d'un sel cationique bivalent anionique monovalent pour fabriquer un engrais liquide contenant de l'urée tel que revendiqué dans la revendication 17, dans lequel le rapport molaire d'urée-N au cation bivalent est inférieur ou égal à 6:1.

19. L'utilisation d'un sel cationique bivalent anionique monovalent pour fabriquer un engrais liquide contenant de l'urée tel que revendiqué dans la revendication 18, dans lequel le rapport molaire d'urée-N au cation bivalent est de 4:1.

20. L'utilisation d'un sel cationique bivalent anionique monovalent pour fabriquer un engrais liquide contenant de l'urée tel que revendiqué dans l'une quelconque des revendications 17 à 19, qui comprend en outre un sel de potassium.

21. L'utilisation d'un sel cationique bivalent anionique monovalent pour fabriquer un engrais liquide contenant de l'urée tel que revendiqué dans la revendication 20, dans lequel le sel de potassium est du sulfate de potassium ou du chlorure de potassium.

22. L'utilisation d'un sel cationique bivalent anionique monovalent pour fabriquer un engrais liquide contenant de l'urée tel que revendiqué dans l'une quelconque des revendications 17 à 21, qui comprend en outre un produit du soufre.

23. L'utilisation d'un sel cationique bivalent anionique monovalent pour fabriquer un engrais liquide contenant de l'urée tel que revendiqué dans la revendication 22, dans lequel le produit du soufre est du thiosulfate d'ammonium ou du sulfate d'ammonium.